# EUROPEAN PATENT SPECIFICATION

(11) **EP 4 412 843 B1**
(45) Date of publication and mention of the grant of the patent: **09.07.2025**
(21) Application number: 22844015.2
(22) Date of filing: 22.12.2022
(51) Int. Cl.: B60H 1/00, B60H 3/06, H05B 1/02, H05B 3/06

(54) **AIR DEFLECTOR FOR CABIN AIR RECIRCULATION SYSTEM**
LUFTDEFLEKTOR FÜR KABINENLUFTRÜCKFÜHRUNGSSYSTEM
DÉFLECTEUR D'AIR POUR SYSTÈME DE RECIRCULATION D'AIR D'HABITACLE

(43) Date of publication of application: 14.08.2024
(73) Proprietor: MANN+HUMMEL GmbH, 71636 Ludwigsburg (DE)
(72) Inventor: CHAI, Jon, Shanghai 201815 (CN); WU, Lei, Shanghai 201815 (CN); MBADINGA MOUANDA, Gelase, 74343 Sachsenheim (DE)
(74) Representative: Mann + Hummel Intellectual Property
(86) International application number: PCT/CN2022/141029
(87) International publication number: WO 2024/130645

(56) References cited:
- FR-A1- 3 075 110
- JP-A- 2015 112 905
- US-A1- 2012 012 573

## Description

### Technical Field

The present invention relates to a cabin air recirculation system for HVAC system, and more specifically to an air deflector for a cabin air recirculation system.

### Background Art

The HVAC system can be operated in an external circulation mode or in an air recirculation (i.e., internal circulation) mode. The power consumed by the HVAC system of electric vehicles is mostly between 1-2kW, that is, every hour of air conditioning will reduce about 10.9km of range. If the vehicle turns on the external circulation but under the maximum air volume conditions, additional 7km of range will be reduce every hour, that is, if the HVAC system turns on external circulation mode, the vehicle is in the external circulation mode, the HVAC system will reduce 17.9km of range per hour. This will greatly reduce the range of electric vehicles.

If the HVAC system is in the air recirculation mode, the power consumed will be greatly reduced. However, adults normally emit about 30 g/hour of water and about 40g/hour of carbon dioxide by breathing. If the HVAC system is always in air recirculation mode while the vehicle is moving, the water vapor emitted by the human body will cause fogging on the glass of the vehicle, which will bring unpredictable danger to the driver and passengers of the vehicle. If the defogging mode is continuously turned on, it will increase the power consumption and reduce the range of the vehicle. Moreover, in the air recirculation mode, the CO2 inside the vehicle will continue to increase, which will cause the driver to be sleepy during driving, which will bring potential danger to the normal operation of the vehicle.

In addition, the current cabin air recirculation systems are complicated, and include various pipes and lines. For example, US2012012573A1 describes an electrical motor-vehicle auxiliary heating device for assembly in a flow channel provided with an insertion opening, the motor-vehicle auxiliary heating device comprising a layered heating block comprising at least one PTC heating element and at least one radiator element abutting thereto, which heating block is held in a housing forming oppositely situated air passage areas with formed air passage apertures. The heating device further comprises a frame-shaped flow resistance element providing a receptacle for the housing and formed as a sliding guide for the housing. The housing is accommodated in the flow resistance element as a component independent of the flow resistance element, and the flow resistance element is formed such that a clearance distance between the housing and a wall of the flow channel at the level of the motor-vehicle auxiliary heating device is bridgeable by the flow resistance element.

To this end, it is desirable to develop a cabin air recirculation system, which allows the vehicle to filter and adsorb water vapor and carbon dioxide and other harmful substances in the air in the vehicle cabin, thereby avoiding fogging of the vehicle during driving, and ensuring that the driver and passengers will not be fatigued and sleepy due to excessive concentrations of carbon dioxide. In addition, it is desirable to develop a cabin air recirculation system, which is simple in structure, reduces the number of components and is easy to assembly.

### Summary

Objects of the present disclosure are to provide an integrated cabin air recirculation system, which is simple in structure, reduces the number of components and is easy to assembly.

According to the invention as defined in independent claim 1, an air deflector for a cabin air recirculation system is provided. The air deflector comprises:
a heater mounting portion defining a heater mounting groove, which is used to guide and position a heater;
the heater mounting portion is generally box-shaped, and includes a top wall, two vertical side walls extending along a heater installation direction on both sides of the heater mounting portion, and two ribs extending along the heater installation direction on both sides of the heater mounting portion, each rib includes a first end portion which is distal relative to the heater installation direction and extends horizontally along the heater installation direction and a second end portion which is proximal relative to the heater installation direction and extends horizontally along the heater installation direction;
wherein a height of each rib increases along the heater installation direction between the first end portion and the second end portion, so that the distance of between the rib and the top wall at the first end portion is less than the distance between the rib and the top wall at the second end portion, to reduce the sliding friction of the heater during installation.

Preferably, the distance of between the rib and the top wall at the first end portion is slightly less than the height of the heater, and thus is designed to fit the heater tightly, to avoid shaking after the heater is installed, and wherein the distance between the rib and the top wall at the second end portion is greater than the height of the heater, and thus is designed to reduce the sliding friction of the heater during installation.

Preferably, the air deflector further comprises a guide positioning rib for cooperating with an installation guide groove on an adsorption cartridge mounting frame of the cabin air recirculation system.

Preferably, the air deflector further comprises an air guide grid suitable to evenly guide airflow in the vertical direction to the lateral direction of an adsorption cartridge of the cabin air recirculation system on both sides.

Preferably, the air deflector further comprises installation structure for cooperating with the installation point on the adsorption cartridge mounting frame, and for fixing the air deflector and the adsorption cartridge mounting frame together.

Preferably, the installation structure is a flange with a screwed hole, and the installation point on the adsorption cartridge mounting frame is a boss with a screwed hole.

Preferably, each vertical side wall includes a plurality of heat dissipation holes.

Preferably, the top wall is n-shaped, so as to allow air to flow through the first heater or the second heater of the cabin air recirculation system.

In the subject application, since the height of each rib increases along the heater installation direction, so that the distance of between the rib and the top wall at the first end portion is less than the distance between the rib and the top wall at the second end portion, to reduce the sliding friction of the heater during installation. In addition, Horizontal first and second end portions facilitate heater fixing.

In addition, the distance of between the rib and the top wall at the first end portion is slightly less than the height of the heater, and thus is designed to fit the heater tightly, to avoid shaking after the heater is installed. The distance between the rib and the top wall at the second end portion is greater than the height of the heater, and thus is designed to reduce the sliding friction of the heater during installation.

Further areas of applicability of the present disclosure will become apparent from the detailed description, the claims and the drawings. The detailed description and specific examples are intended for purposes of illustration only and are not intended to limit the scope of the invention.

### Brief Description of Drawings

The present invention will become more fully understood from the detailed description and the accompanying drawings.
Fig.1 schematically illustrates in perspective view an exemplary cabin air recirculation system for HVAC system for a vehicle in accordance with the present disclosure.
Fig.2 schematically illustrates in exploded perspective view an exemplary cabin air recirculation system in accordance with the present disclosure, which including an upper housing, a first adsorption unit, a second adsorption unit, a first heater, a second heater and a lower housing.
Fig.3 schematically illustrates in exploded perspective view an exemplary first adsorption unit of the cabin air recirculation system in accordance with the present disclosure.
Fig.4 schematically illustrates in perspective view an exemplary adsorption cartridge in accordance with the present disclosure.
Fig.5 schematically illustrates in perspective view an exemplary adsorption cartridge mounting frame in accordance with the present disclosure.
Fig.6 schematically illustrates in perspective view an exemplary air deflector in accordance with the present disclosure.
Fig.7 schematically illustrates in perspective view an exemplary first heater of the cabin air recirculation system in accordance with the present disclosure.
Fig.8 schematically illustrates in perspective view an exemplary upper housing of the cabin air recirculation system in accordance with the present disclosure.
Fig.9 schematically illustrates in another perspective view an exemplary upper housing of the cabin air recirculation system in accordance with the present disclosure, as viewed from a first end of the upper housing.
Fig.10 schematically illustrates in perspective view an exemplary lower housing of the cabin air recirculation system in accordance with the present disclosure.
Fig.11 schematically illustrates in another perspective view an exemplary lower housing of the cabin air recirculation system in accordance with the present disclosure, as viewed from a second end of the lower housing.
Fig.12 schematically illustrates in perspective view an exemplary intake flap system of the cabin air recirculation system in accordance with the present disclosure.
Fig.13 schematically illustrates in perspective view an exemplary outlet flap system of the cabin air recirculation system in accordance with the present disclosure.
Fig.14 schematically illustrates in top view an exemplary cabin air recirculation system in accordance with the present disclosure.
Fig.15 schematically illustrates in front view the cabin air recirculation system in accordance with the present disclosure.
Fig.16 schematically illustrates in cross-sectional view the cabin air recirculation system in accordance with the present disclosure along the line A-A of Fig.15, wherein the cabin air recirculation system is in a first pure adsorption mode, in which the first adsorption unit is in the adsorption mode and the second adsorption unit is in the non-working mode.
Fig.17 schematically illustrates in cross-sectional view the cabin air recirculation system in accordance with the present disclosure along the line B-B of Fig. 15, wherein the cabin air recirculation system is in the first pure adsorption mode.
Fig.18 schematically illustrates in cross-sectional view the cabin air recirculation system in accordance with the present disclosure along the line C-C of Fig. 15, wherein the cabin air recirculation system is in the first pure adsorption mode.
Fig.19 schematically illustrates in cross-sectional view the cabin air recirculation system in accordance with the present disclosure along the line A-A of Fig.15, wherein the cabin air recirculation system is in a first adsorption-regeneration mode, in which the second adsorption unit is in adsorption mode and the first adsorption unit is in regeneration mode.
Fig.20 schematically illustrates in cross-sectional view the cabin air recirculation system in accordance with the present disclosure along the line B-B of Fig. 15, wherein the cabin air recirculation system is in the first adsorption-regeneration mode.
Fig.21 schematically illustrates in cross-sectional view the cabin air recirculation system in accordance with the present disclosure along the line C-C of Fig. 15, wherein the cabin air recirculation system is in the first adsorption-regeneration mode.
Fig.22 schematically illustrates in cross-sectional view the cabin air recirculation system in accordance with the present disclosure along the line A-A of Fig.15, wherein the cabin air recirculation system is in a second pure adsorption mode, in which the second adsorption unit is in the adsorption mode, and the first adsorption unit is in the non-working mode.
Fig.23 schematically illustrates in cross-sectional view the cabin air recirculation system in accordance with the present disclosure along the line B-B of Fig. 15, wherein the cabin air recirculation system is in the second pure adsorption mode.
Fig.24 schematically illustrates in cross-sectional view the cabin air recirculation system in accordance with the present disclosure along the line C-C of Fig. 15, wherein the cabin air recirculation system is in the second pure adsorption mode.
Fig.25 schematically illustrates in cross-sectional view the cabin air recirculation system in accordance with the present disclosure along the line A-A of Fig. 15, wherein the cabin air recirculation system is in a second adsorption-regeneration mode , in which the first adsorption unit is in adsorption mode and the second adsorption unit is in regeneration mode.
Fig.26 schematically illustrates in cross-sectional view the cabin air recirculation system in accordance with the present disclosure along the line B-B of Fig. 15, wherein the cabin air recirculation system is in the second adsorption-regeneration mode.
Fig.27 schematically illustrates in cross-sectional view the cabin air recirculation system in accordance with the present disclosure along the line C-C of Fig. 15, wherein the cabin air recirculation system is in the second adsorption-regeneration mode.
Fig.28 schematically illustrates in perspective view an exemplary air deflector in accordance with the present disclosure, with the first heater or the second heater to be inserted along a heater installation direction H.
Fig.29 schematically illustrates the increase of the height of the rib of the exemplary air deflector along the heater installation direction H.

### Description of Embodiments

As used herein, words such as "up", "down", "left", and "right" used herein to define orientations generally refer to and are understood as orientations in association with the drawings and orientations in actual application.

As used herein, the term "vehicle" may be used interchangeably and synonymously to include any relevant vehicle platform, such as passenger vehicles (ICE, HEV, FEV, fuel cell, fully and partially autonomous, etc.), commercial vehicles, industrial vehicles, tracked vehicles, off-road and all-terrain vehicles (ATV), motorcycles, farm equipment, watercraft, aircraft, etc. In an example, an electric vehicle includes a vehicle body with a passenger cabin, multiple road wheels mounted to the vehicle body, and other standard original equipment. An electrified powertrain contains one or more vehicle-mounted traction motors that operate alone (e.g., for FEV powertrains) or in conjunction with an internal combustion engine assembly (e.g., for HEV powertrains) to selectively drive one or more of the road wheels and thereby propel the vehicle.

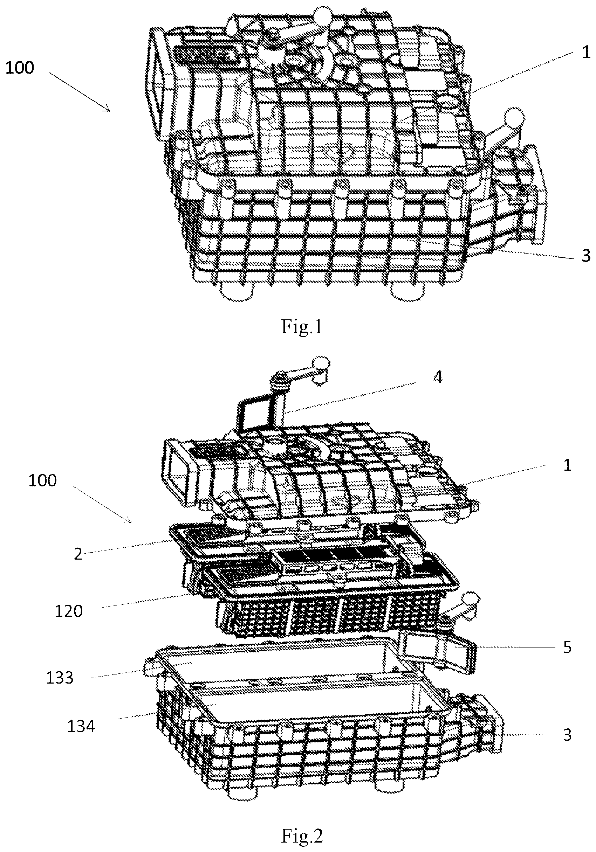

Referring now to the drawings, wherein like reference numbers refer to like features throughout the several views, Fig.1 schematically illustrates in perspective view an exemplary cabin air recirculation system for HVAC system for a vehicle in accordance with the present disclosure; Fig.2 schematically illustrates in exploded perspective view an exemplary cabin air recirculation system in accordance with the present disclosure.

The cabin air recirculation system 100 may comprise an upper housing 1, two adsorption units 2, 120 (a first adsorption unit 2 and a second adsorption unit 120), a lower housing 3, a first heater 10, a second heater 152, an intake flap system 4, and an outlet flap system 5. The cabin air recirculation system 100 may comprise other components as needed, such as a controller, at least one sensor, etc.

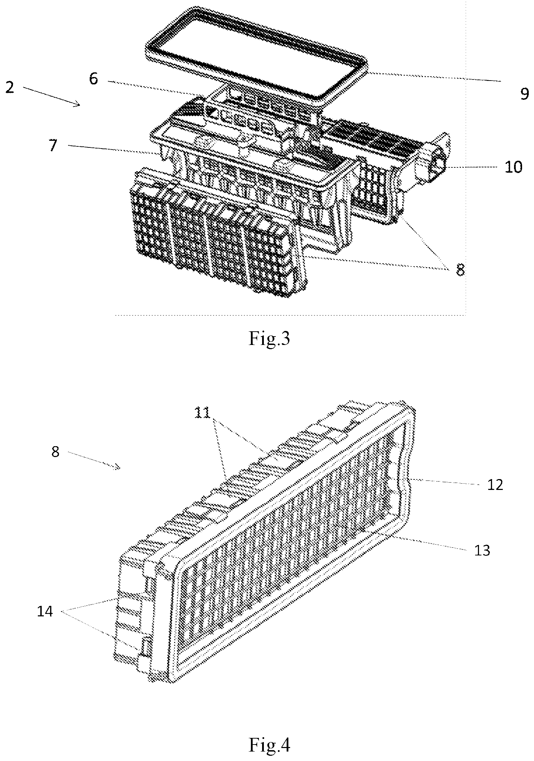

Fig.3 schematically illustrates in exploded perspective view an exemplary first adsorption unit 2 of the cabin air recirculation system in accordance with the present disclosure. Each of the first adsorption unit 2 and the second adsorption unit 120 is configured to adsorb moisture and/or or carbon dioxide. The first adsorption unit 2 includes an air deflector 6, an adsorption cartridge mounting frame 7, at least one adsorption cartridge 8, and a sealing ring 9. As a non-limiting example, the first adsorption unit 2 includes two adsorption cartridges 8. However, as will be understood by those skilled in the art, the first adsorption unit 2 may include any suitable number of adsorption cartridges 8, without departing the scope of the disclosure. As a non-limiting example, the second adsorption unit 120 has the same structure as first adsorption unit 2. In this regard, the description of the second adsorption unit 120 is omitted for brief. However, as will be understood by those skilled in the art, the second adsorption unit 120 may be different from first adsorption unit 2, for example may include different number of adsorption cartridges 8, without departing the scope of the disclosure. In addition, the first adsorption unit 2 may comprise other components as needed, without departing the scope of the disclosure.

Fig.4 schematically illustrates in perspective view an exemplary adsorption cartridge 8 in accordance with the present disclosure. The adsorption cartridge 8 may be filled with water vapor adsorption material, carbon dioxide adsorption material, volatile adsorption material or adsorption material for absorbing other harmful substances according to customer needs. As a non-limiting example, the adsorption material may include resin, which has a certain adsorption capacity at room temperature, and has desorption ability at a temperature of 80-120 °C. By using the properties of low-temperature adsorption and high-temperature desorption of resin, the air quality in the cabin is well controlled. However, as will be understood by those skilled in the art, the adsorption material may made from any suitable material, without departing the scope of the disclosure.

The adsorption cartridge 8 includes a mounting snap 11, which can be quickly installed on the adsorption cartridge mounting frame 7 and quickly removed from the mounting frame 7 by snapping. Through this design, the system makes the adsorption cartridge easier to mount and shortens the time during later maintenance and replacement.

The adsorption cartridge 8 further includes an adsorption cartridge sealing strip 12, to effectively prevent the leakage of unadsorbed gas to the clean side, which will affects the adsorption efficiency of the system.

The adsorption cartridge 8 further includes a plastic grid 13, to strengthen the overall strength of the adsorption cartridge 8 and to help balance the airflow of the adsorption cartridge, so that the airflow on the surface of the adsorption cartridge 8 is more balanced, thus improving the adsorption efficiency of the adsorption cartridge 8.

The adsorption cartridge 8 further includes a guide structure 14, to help accurately locate and install the adsorption cartridge, and to avoid the risk of leakage caused by not installing the adsorption cartridge 8 in place. In addition, the adsorption cartridge 8 may comprise other components as needed, without departing the scope of the disclosure.

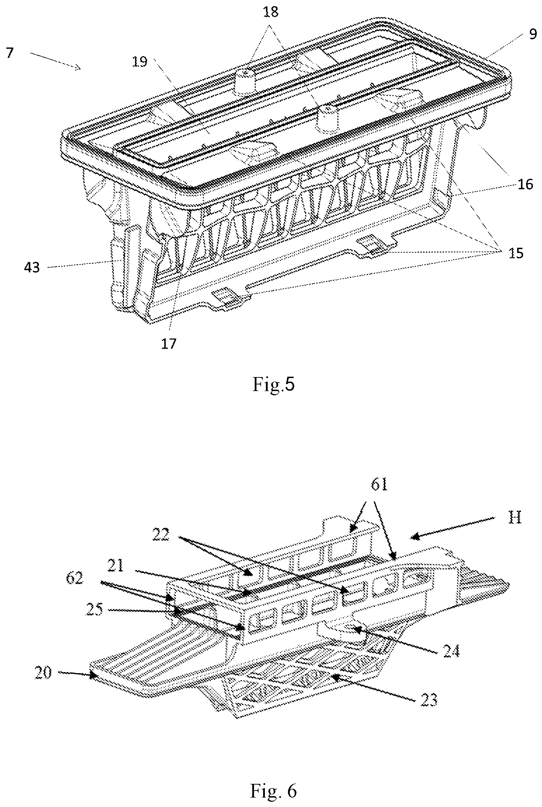

Fig.5 schematically illustrates in perspective view an exemplary adsorption cartridge mounting frame 7 in accordance with the present disclosure. The adsorption cartridge mounting frame 7 includes a sealing strip 9, to prevent the outside air from entering the clean side, and to prevent the two adsorption units from cross-gassing each other, affecting the adsorption efficiency.

The adsorption cartridge mounting frame 7 further includes a snap mounting structure 15, to cooperate with the mounting snap 11 on the adsorption cartridge 8 to reliably install the adsorption cartridge 8 on the mounting frame 7.

The adsorption cartridge mounting frame 7 further includes a positioning guide groove 16, to cooperate with the guide structure 14 on the adsorption cartridge 8 to guide the adsorption cartridge 8 and accurately install the adsorption cartridge 8 in place.

The adsorption cartridge mounting frame 7 further includes an intake grid 17, to assist in balancing airflow into the adsorption cartridge 8, and to strengthen the strength of the mounting frame 7.

The adsorption cartridge mounting frame 7 further includes an installation point 18, to fix the air deflector 6.

The adsorption cartridge mounting frame 7 further includes an installation guide groove 19, to assist and locate the air deflector 6, ensuring that the air deflector 6 can be accurately installed in place, and preventing excessive unheated gas from entering the adsorption cartridge 8, affecting the regeneration time of the adsorption cartridge.

The adsorption cartridge mounting frame 7 further includes a positioning structure 43, which cooperates with the installation positioning guide groove 42 on the lower housing 3, to install the first adsorption unit 2 and the second adsorption unit 120 in place. In addition, the adsorption cartridge mounting frame 7 may comprise other components as needed, without departing the scope of the disclosure.

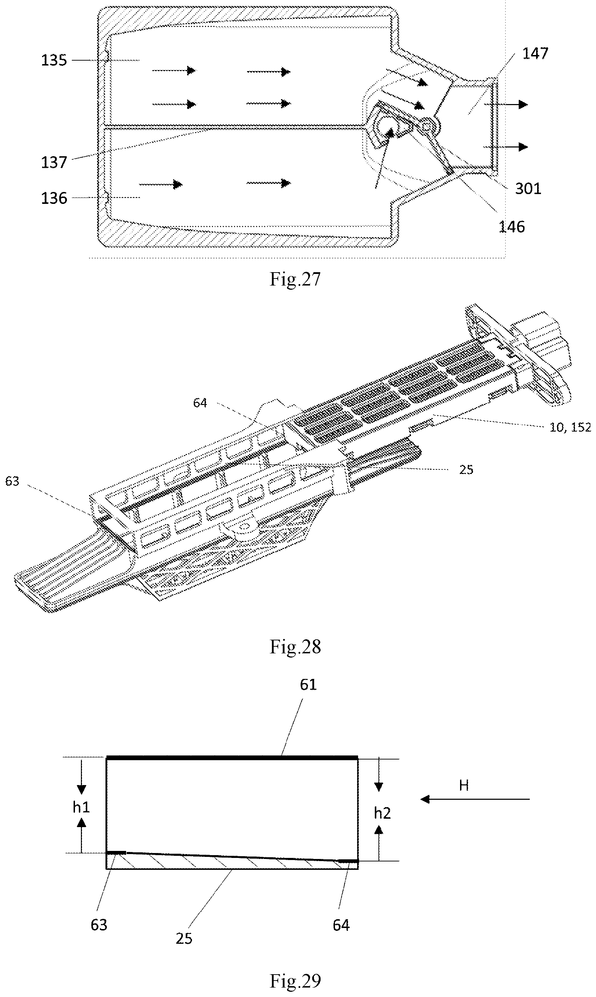

Fig.6 schematically illustrates in perspective view an exemplary air deflector 6 in accordance with the present invention. Fig.28 schematically illustrates in perspective view an exemplary air deflector in accordance with the present invention, with the first heater or the second heater to be inserted along a heater installation direction H. Fig.29 schematically illustrates the increase of the height of the rib of the exemplary air deflector along the heater installation direction H.

The air deflector 6 includes a guide positioning rib 20, which cooperates with the installation guide groove 19 on the adsorption cartridge mounting frame 7 to install the air deflector 6 in place, and prevent unheated gas from entering the adsorption cartridge excessively, affecting the regeneration time of the adsorption cartridge 8.

The air deflector 6 further includes an air guide grid 23, to evenly guide airflow in the vertical direction to the lateral direction of the adsorption cartridge 8 on both sides, so that the gas can evenly pass through the adsorption cartridge 8.

The air deflector 6 further includes installation structure 24, to cooperate with the installation point 18 on the adsorption cartridge mounting frame 7, and to fix the air deflector 6 and the adsorption cartridge mounting frame 7 together. As a non-limiting example, the installation structure 24 is a flange with a screwed hole, and the installation point 18 on the adsorption cartridge mounting frame 7 is a boss with a screwed hole. However, as will be understood by those skilled in the art, the installation structure 24 and the installation point 18 can be any other suitable form.

The air deflector 6 further includes a heater mounting portion defining a heater mounting groove 21, which serves to guide and position the first heater 10 or the second heater 152 to avoid damage to the heating part of the first heater 10 or the second heater 152.

The heater mounting portion is generally box-shaped, and includes a top wall 61, two vertical side walls 62 extending along a heater installation direction H on both sides of the heater mounting portion, and two ribs 25 extending along the heater installation direction H on both sides of the heater mounting portion. Each vertical side wall 62 includes a plurality of heat dissipation holes 22, to assist the first heater 10 or the second heater 152 to adequately dissipate heat during work and to avoid the risk of local overheating of the first heater 10 or the second heater 152. The top wall 61 is generally n-shaped, so as to allow air to flow through the first heater 10 or the second heater 152.

As best shown in Fig.29, each rib 25 includes a first end portion 63 which is distal relative to the heater installation direction H and extends horizontally along the heater installation direction H and a second end portion 64 which is proximal relative to the heater installation direction H and extends horizontally along the heater installation direction H. In the non-limiting example, the first end portion 63 of the each rib 25 extends horizontally about 10 mm along the heater installation direction H, to facilitate fixing and positioning the first heater 10 and the second heater 152. However, as will be understood by those skilled in the art, the first end portion 63 of the each rib 25 may extend horizontally any other suitable distance along the heater installation direction H, without departing the scope of the disclosure. In the non-limiting example, the second end portion 64 of the each rib 25 extends horizontally about 10 mm along the heater installation direction H, to facilitate fixing the first heater 10 and the second heater 152. However, as will be understood by those skilled in the art, the second end portion 64 of the each rib 25 may extend horizontally any other suitable distance along the heater installation direction H.

The height of each rib 25 increases along the heater installation direction H between the first end portion 63 and the second end portion 64, so that the distance h1 of between the rib 25 and the top wall 61 at the first end portion 63 is less than the distance h2 between the rib 25 and the top wall 61 at the second end portion 64, to reduce the sliding friction of the first heater 10 and the second heater 152 during installation. In the non-limiting example, the distance h1 of between the rib 25 and the top wall 61 at the first end portion 63 is about 3 mm less than the distance h2 between the rib 25 and the top wall 61 at the second end portion 64, to reduce the sliding friction of the first heater 10 and the second heater 152 during installation.

The distance h1 of between the rib 25 and the top wall 61 at the first end portion 63 is slightly less than the height of the first heater 10 and the second heater 152, and thus is designed to fit the first heater 10 and the second heater 152 tightly, to avoid shaking after the first heater 10 and the second heater 152 is installed. The distance h2 between the rib 25 and the top wall 61 at the second end portion 64 is greater than the height of the first heater 10 and the second heater 152, and thus is designed to reduce the sliding friction of the first heater 10 and the second heater 152 during installation. In addition, the air deflector 6 may comprise other components as needed, without departing the scope of the invention as defined in the appended claims.

The first heater 10 and the second heater 152 disposed in the first passage 106 and the second passage 107 respectively, the first heater 10 and the second heater 152 configured to heat the air delivered to the first adsorption unit 2 and the second adsorption unit 120, respectively, which are used to regenerate the first adsorption unit 2 and the second adsorption unit 120 respectively.

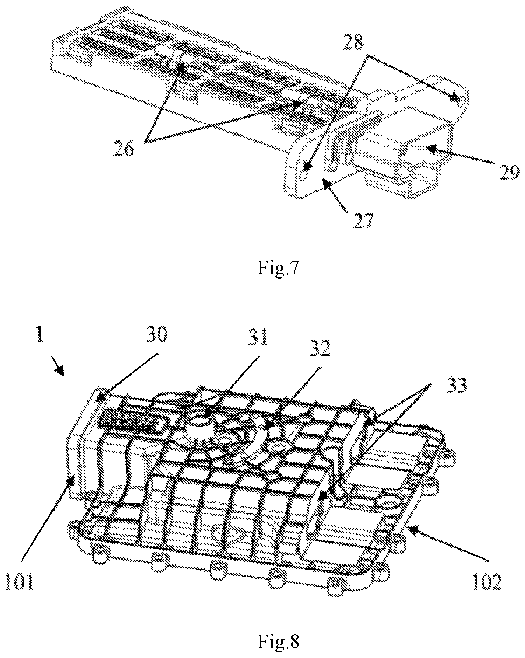

Fig.7 schematically illustrates in perspective view an exemplary first heater 10 of the cabin air recirculation system 100 in accordance with the present disclosure. The first heater 10 includes at least one temperature sensor 26, which can effectively monitor the temperature change of the first heater 10 and prevent accidents caused by heater overheating and failure caused by its heater failure as well as control regeneration temperature. As a non-limiting example, the first heater 10 includes two temperature sensors 26. However, as will be understood by those skilled in the art, the first heater 10 may include any suitable number of temperature sensors 26, without departing the scope of the disclosure.

The first heater 10 further includes a mounting flange face 27, when the heater is installed in place, the first heater 10 is fixed to the upper housing 1 by screws. The mounting flange face 27 is designed with two fixed mounting holes 28 for fixing the first heater 10 on the upper housing 1 with screws.

The first heater 10 further includes a flange face 27, designed with a power plug interface 29, for connecting the first heater 10 to the power supply. The first heater 10 further includes a step at the lower surface near the flange face 26, the height of the step is equal to height difference between the first end portion 63 the second end portion 64 of the ribs 25, so that the first heater 10 can be firmly held in the air deflector 6. As a non-limiting example, the second heater 152 has the same structure as the first heater 10. In this regard, the description of the second heater 152 is omitted for brief. However, as will be understood by those skilled in the art, the second heater 152 may be different from the first heater 10, for example may include different number of temperature sensors 26, without departing the scope of the disclosure. In addition, the first heater 10 may comprise other components as needed, without departing the scope of the disclosure.

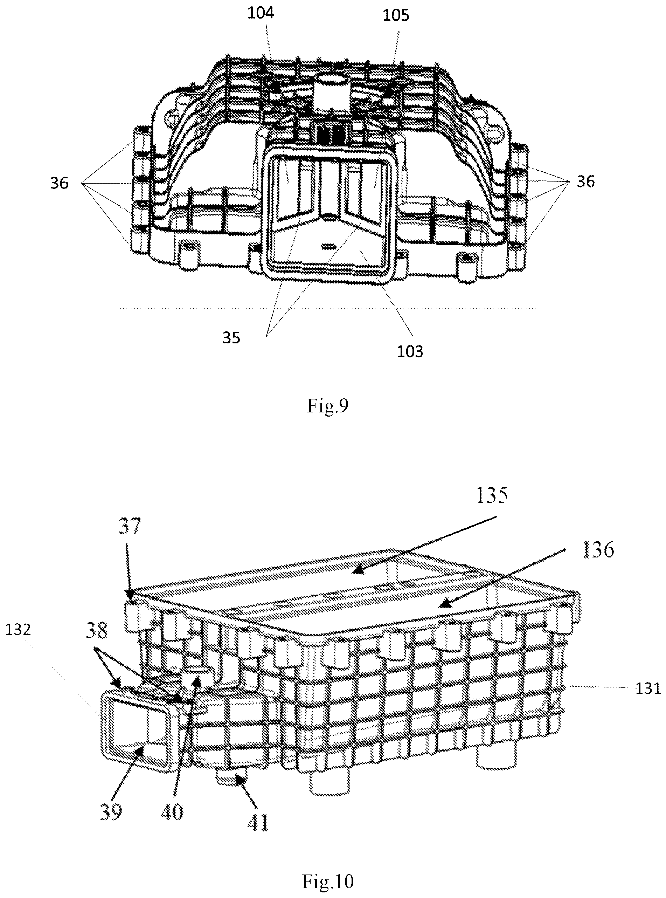

Fig.8 schematically illustrates in perspective view an exemplary upper housing 1 of the cabin air recirculation system in accordance with the present disclosure. Fig.9 schematically illustrates in another perspective view the upper housing 1, as viewed from a first end of the upper housing 1. The upper housing 1 includes a first end 101 and an opposite second end 102, the upper housing 1 defining: an air inlet 30 located at the first end 101 of the upper housing 1 for receiving air from a vehicle cabin; an inlet passage 103 extending downstream from the air inlet 30; a first port 104 and a second port 105 disposed at the downstream end of the inlet passage 103; a first passage 106 and a second passage 107 respectively communicating with the first port 104 and the second port 105, the first passage 106 and the second passage 107 being separated by the partition wall 108 of the upper housing; and a first outlet 111 and a second outlet 112 arranged at the lower end of the upper housing and communicated with the first passage 106 and the second passage 107 respectively.

The upper housing 1 is provided with a mounting and fixing structure 31 for intake flap system 4 to ensure that the intake flap system 4 can be assembled in correct position, and has the required sealing function.

The upper housing 1 is provided with a flap positioning structure 32, to assists in positioning the intake flap system 4 in place.

The upper housing 1 further includes a flange 33 for fixing the first heater 10 or the second heater 152 to ensure that the first heater 10 can be installed accurately, to avoid the potential risk of the heater misalignment.

The upper housing 1 further includes a sealing structure 35, which cooperates with the intake flap system 4, to seal the first port 104 and the second port 105 as needed.

The upper housing 1 includes assembly structure 36 which cooperates with corresponding assembly structure 37 of the lower housing 3. As a non-limiting example, the assembly structure 36 of the upper housing 1 and the assembly structure 37 of the lower housing 3 are a plurality of mounting holes for fasteners to pass through. However, as will be understood by those skilled in the art, the assembly structure 36 may use other structure, without departing the scope of the disclosure. With the upper housing 1 and the lower housing 3 assembled together, the sealing ring 9 ensures that the inner chamber of the upper housing 1 and the lower housing 3 is sealed to avoid leakage.

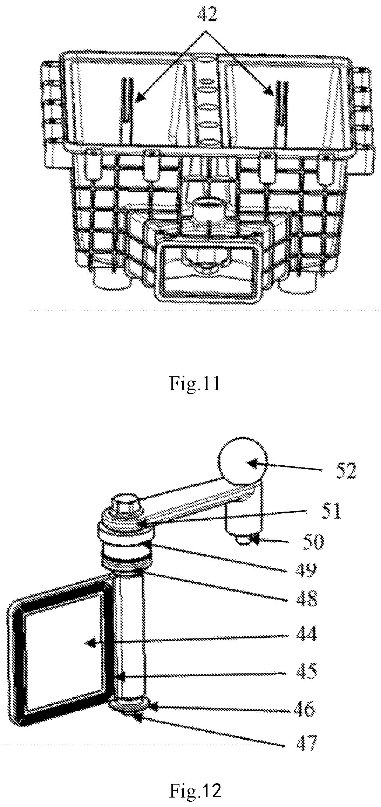

Fig.10 schematically illustrates in perspective view an exemplary lower housing 3 of the cabin air recirculation system 100 in accordance with the present disclosure. Fig.11 schematically illustrates in another perspective view the lower housing 3, as viewed from a second end 132 of the lower housing 3.

The lower housing 3 includes a first end 131 and an opposite second end 132. The lower housing defines: a first inlet 133 and a second inlet 134 disposed on the upper end of the lower housing 3 and sealingly engaged with the first outlet 111 and the second outlet 112, respectively; a first adsorption unit chamber 135 and a second adsorption unit chamber 136 communicated with the first inlet 133 and the second inlet 134 respectively, the first adsorption unit chamber 135 and the second adsorption unit chamber 136 are separated by the partition wall 137 of the lower housing 3, the downstream end of the first adsorption unit chamber 135 is provided with a first exhaust port 143 and a first outlet port 141, and the downstream end of the second adsorption unit chamber 136 is provided with a second exhaust port 144 and a second outlet port 142; and an exhaust passage 147 and an outlet passage 146 provided at the second end of the lower housing, the exhaust passage 147 selectively communicates with the first exhaust port 143 and the second exhaust port 144, and discharges the exhaust including gas and water after regenerating to the environment through the exhaust outlet 41, the outlet passage 146 selectively communicates with the first outlet port 141 and the second outlet port 142, and transports the adsorbed and purified air to the cabin through the air outlet 39.

The lower housing 3 further includes a flap positioning structure 38, to assisting in positioning the outlet flap system 5 in place.

The lower housing 3 further includes an installation and fixing structure 40 for the outlet flap system 5, ensuring that the outlet flap system 5 can be assembled in place, and has the required sealing function.

The lower housing 3 further includes an installation positioning guide groove 42 for the first adsorption unit 2 and the second adsorption unit 120, which cooperates with the positioning structure 43 on the adsorption cartridge mounting bracket 7, which facilitates the smooth installation of the first adsorption unit 2 and the second adsorption unit 120 in place. The first adsorption unit 2 and a second adsorption unit 120 are respectively disposed in the first adsorption unit chamber 135 and the second adsorption unit chamber 136.

The cabin air recirculation system 100 is highly integrated to reduce the external size of the product and enhance the competitiveness of the cabin air recirculation system 100. In addition, the integrated cabin air recirculation system 100 is simple in structure, reduces the number of components and is easy to assembly.

Fig.12 schematically illustrates in perspective view an exemplary intake flap system 4 of the cabin air recirculation system in accordance with the present disclosure.

The cabin air recirculation system 100 further comprises an intake flap system 4 capable of selectively controlling the first port 104 and the second port 105 and configured with a first pure adsorption position 201, a second pure adsorption position 202, a first adsorption-regeneration position 203 and a second adsorption-regeneration position 204. In the first pure adsorption position 201, the inlet passage 105 communicates with the first passage 106 and does not communicate with the second passage 107. In the second pure adsorption position 202, the inlet passage 105 does not communicate with the first passage 106 and communicates with the second passage 107. In the first adsorption-regeneration position 203, the inlet passage 105 communicates with both the first passage 106 and the second passage 107, and the amount of air delivered from the inlet passage 105 to the first passage 106 is less than the amount of air delivered from the inlet passage 105 to the second passage 107; in the second adsorption-regeneration position 204, the inlet passage 105 communicates with both the first passage 106 and the second passage 107, and the amount of air delivered from the inlet passage 105 to the second passage 107 is less than the amount of air delivered from the inlet passage to the first passage.

The flap positioning structure 32 of the upper housing 1 can position the intake flap system 4 at one of the first pure adsorption position 201, the second pure adsorption position 202, the first adsorption-regeneration position 203 and the second adsorption-regeneration position 204.

The intake flap system 4 includes a valve plate 44, a seal member 45, a transmission mechanism and a drive mechanism. As a non-limiting example, the seal member 45 and the valve plate 44 may be manufactured by injection molding. However, as will be understood by those skilled in the art, the seal member 45 and the valve plate 44 may made from any suitable method, such as 3D printing, without departing the scope of the disclosure.

The seal member 45 of the intake flap system 4 may be designed into different sealing sections according to requirements and applications.

The transmission mechanism of the intake flap system 4 comprises a bearing 46, a shaft 47, a sealing ring 48 and a mounting plug 49. The drive mechanism of the intake flap system 4 comprises a positioning pin 50, a transmission shaft 51, and a drive handle 52. However, as will be understood by those skilled in the art, the drive mechanism of the intake flap system 4 can be replaced by a drive motor, with control logic and sensor signals, for fully automatic control, without departing the scope of the disclosure.

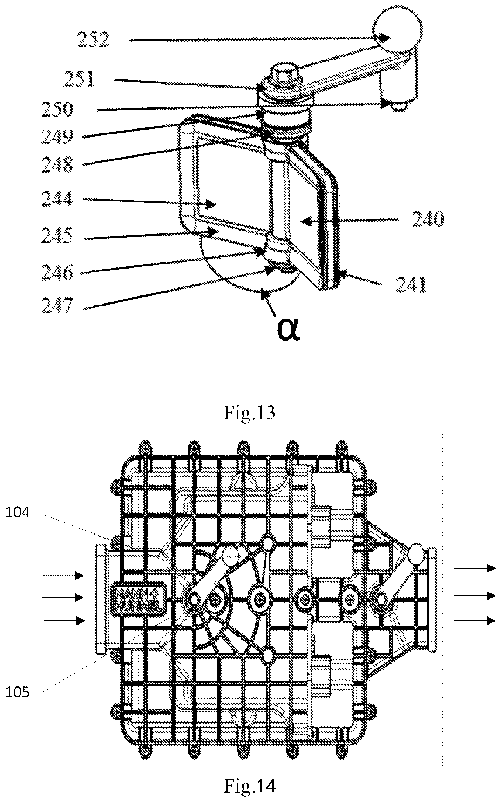

Fig.13 schematically illustrates in perspective view an exemplary outlet flap system 5 of the cabin air recirculation system 100 in accordance with the present disclosure.

The cabin air recirculation system 100 further comprises an outlet flap system 5 configured with a first position 301 and a second position 302. In the first position 301, the exhaust passage 147 communicates with the second adsorption unit chamber 136 and does not communicate with the first adsorption unit chamber 135, and the outlet passage 146 communicates with the first adsorption unit chamber 135 and does not communicate with the second adsorption unit chamber 136. In the second position 302, the exhaust passage 147 communicates with the first adsorption unit chamber 135 and does not communicate with the second adsorption unit chamber 136, and the outlet passage communicates with the second adsorption unit chamber 136 and does not communicate with the first adsorption unit chamber 135.

The outlet flap system 5 comprises a first valve plate 244, a first sealing member 245, a second valve plate 240, a second sealing member 241, a transmission mechanism and a driving structure. The first valve plate 244 and the second valve plate 240 are fixedly connected to the transmission mechanism and are at a predetermined angle (α) with respect to each other, angle formed between the first exhaust port and the second outlet port is equal to the predetermined angle (α), and angle formed between the second exhaust port and the first outlet port is equal to the predetermined angle (α). The upper housing is provided with a flap positioning structure 38 which can position the outlet flap system 5 at one of the first position and the second position.

As a non-limiting example, the first valve plate 244 and the first sealing member 245 may be manufactured by injection molding. However, as will be understood by those skilled in the art, the first valve plate 244 and the first sealing member 245 may made from any suitable method, such as 3D printing, without departing the scope of the disclosure. As a non-limiting example, the second valve plate 240 and the second sealing member 241 may be manufactured by injection molding. However, as will be understood by those skilled in the art, the second valve plate 240 and the second sealing member 241 may made from any suitable method, such as 3D printing, without departing the scope of the disclosure.

The first sealing member 245 and the second sealing member 241 of the outlet flap system 5 may be designed into different sealing sections according to requirements and applications.

The transmission mechanism of the outlet flap system 5 comprises a bearing 246, a shaft 247, a sealing ring 248 and a mounting plug 249. The drive mechanism of the outlet flap system 5 comprises a positioning pin 250, a transmission shaft 251, and a drive handle 252. However, as will be understood by those skilled in the art, the drive mechanism of the outlet flap system 5 can be replaced by a drive motor, with control logic and sensor signals, for fully automatic control, without departing the scope of the disclosure.

By use of the double-sided sealing valve design of the outlet flap system 5, the switching of two passages (the exhaust passage 146 and the outlet passage 147) is controlled at the same time, thereby saving costs.

The cabin air recirculation system 100 further comprises a controller, a first gas sensor disposed near the air outlet, and a second gas sensor disposed near the exhaust outlet 41. The first gas sensor is configured to monitor vehicle the humidity level and/or the carbon dioxide level of the air outlet 39 of the cabin air recirculation system, the second gas sensor is configured to monitor the humidity level and/or the carbon dioxide level of the exhaust outlet 41 of the cabin air recirculation system;

The controller is configured to control the intake flap system 4, the outlet flap system 5, the first heater 10 and the second heater 152 based on output signals of the first gas sensor and the second gas sensor, so that the cabin air recirculation system 100 selects one of a first pure adsorption mode, a second pure adsorption mode, a first adsorption-regeneration mode and a second adsorption-regeneration mode. In the first pure adsorption mode operation, the first adsorption unit 2 is in an adsorption mode, and the second adsorption unit 120 is in a non-working mode. In the first adsorption-regeneration mode, the second adsorption unit 120 is in the adsorption mode, the first heater 10 is activated and the first adsorption unit 2 is in a regeneration mode. In the second pure adsorption mode operation, the second adsorption unit 120 is in the adsorption mode, and the first adsorption unit 2 is in the non-working mode. In the second adsorption-regeneration mode, the first adsorption unit 2 is in the adsorption mode, the second heater 152 is activated and the second adsorption unit 120 is in the regeneration mode.

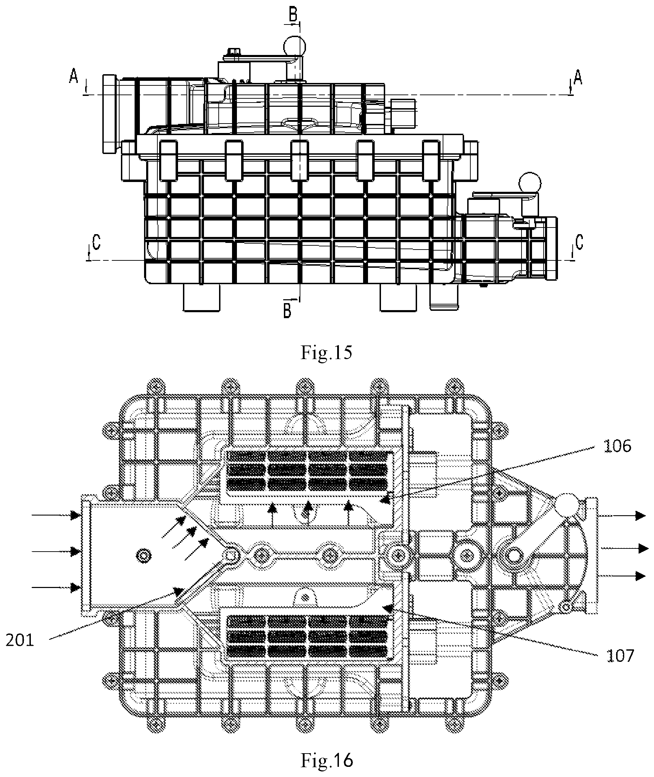

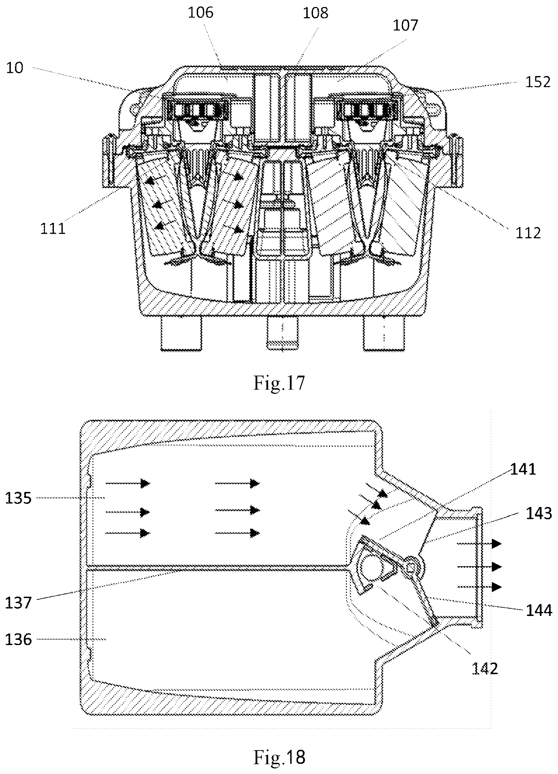

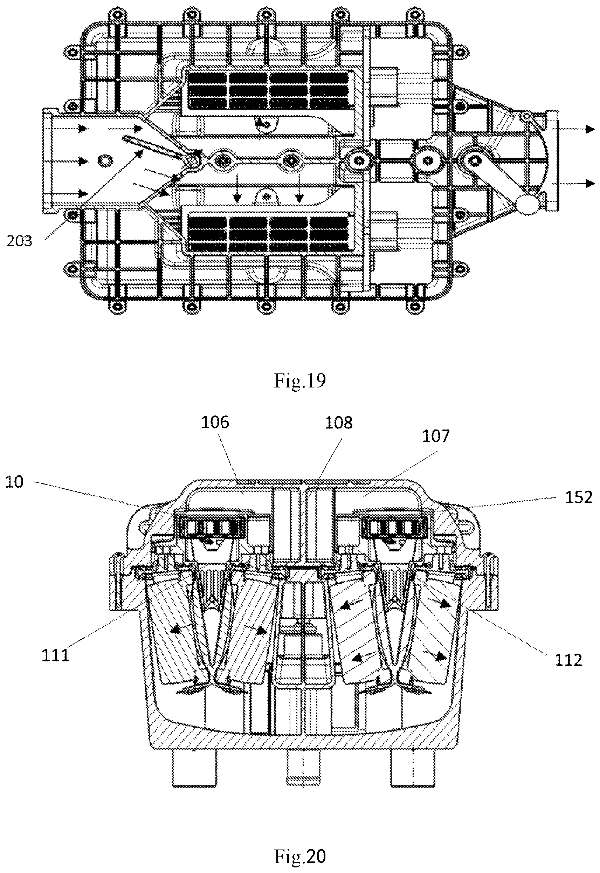

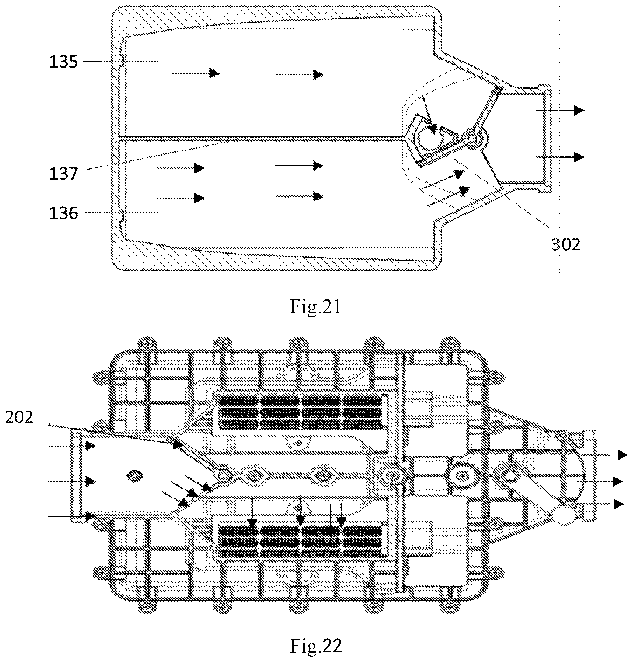

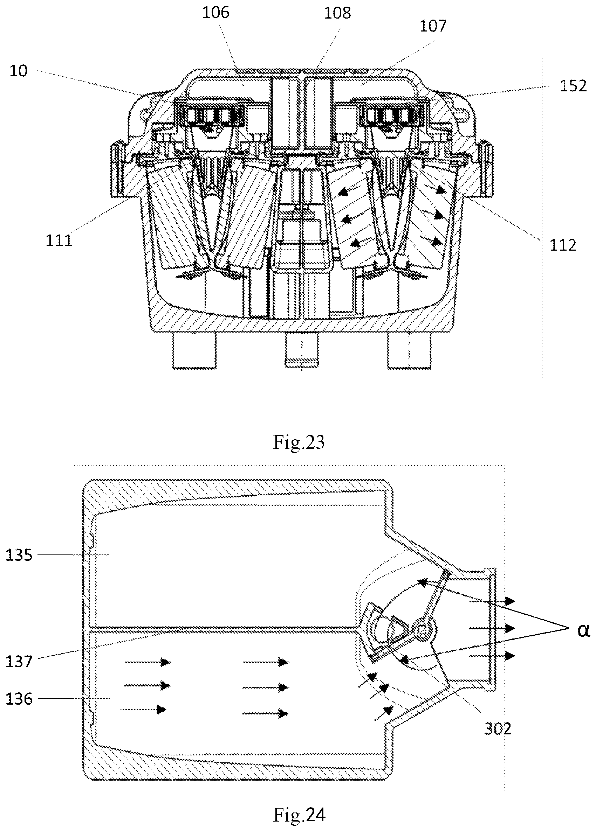

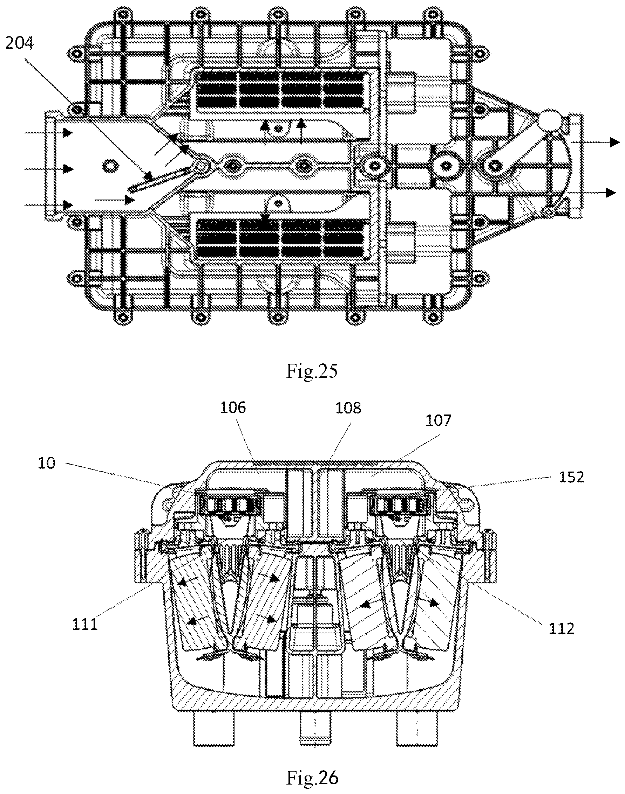

A method of controlling the cabin air recirculation system 100 comprises the steps of:
(a) operating the cabin air recirculation system 100 in a first pure adsorption mode, Fig. 16 schematically illustrates in cross-sectional view the cabin air recirculation system 100 in accordance with the present disclosure along the line A-A of Fig. 15, Fig.17 schematically illustrates in cross-sectional view the cabin air recirculation system in accordance with the present disclosure along the line B-B of Fig. 15, Fig. 18 schematically illustrates in cross-sectional view the cabin air recirculation system in accordance with the present disclosure along the line C-C of Fig. 15, wherein the cabin air recirculation system is in the first pure adsorption mode. As shown in Fig.15-Fig.18, all of the air introduced via air inlet 30 flows to the first passage 106 via the first port 104, through the first adsorption unit chamber 135, the first adsorption unit 2, the first outlet port 141, and then the adsorbed and purified air flows to the cabin through the air outlet 39;
(b) monitor the humidity level and/or carbon dioxide level at the air outlet of the cabin air recirculation system;
(c) operating the cabin air recirculation system 100 in a first adsorption-regeneration mode when the humidity level and/or carbon dioxide level at the air outlet of the cabin air recirculation system 100 exceeds a first predetermined threshold. Fig. 19 schematically illustrates in cross-sectional view the cabin air recirculation system in accordance with the present disclosure along the line A-A of Fig.15, Fig.20 schematically illustrates in cross-sectional view the cabin air recirculation system in accordance with the present disclosure along the line B-B of Fig.15, Fig.21 schematically illustrates in cross-sectional view the cabin air recirculation system in accordance with the present disclosure along the line C-C of Fig.15, wherein the cabin air recirculation system is in the first adsorption-regeneration mode. As shown in Fig.19-Fig.21, a relatively little amount of the air introduced via air inlet 30 flows to the first passage 106 via the first port 104, through the first heater 10, the first adsorption unit chamber 135, the first adsorption unit 2, the first exhaust port 143, and then the exhaust including gas and water flows to the environment through the exhaust outlet 39, whereas the remaining portion of the air introduced via air inlet 30 flows to the second passage 107 via the second port 105, through the second adsorption unit chamber 136, the second adsorption unit 120, the second outlet port 142, and then the adsorbed and purified air flows to the cabin through the air outlet 39. As a non-limiting example, in the first adsorption-regeneration mode, the amount of air used as regeneration gas may be about 1/3 of the air introduced via air inlet 30. However, as will be understood by those skilled in the art, the amount of air used as regeneration gas may be other amounts, such as 25%, 30%, 35%, without departing the scope of the disclosure;
(d) monitor humidity levels and/or carbon dioxide levels at exhaust outlet of cabin air recirculation systems 100;
(e) operating the cabin air recirculation system in a second pure adsorption mode when the humidity level and/or carbon dioxide level at the exhaust outlet of the cabin air recirculation system 100 is below a second predetermined threshold. Fig.22 schematically illustrates in cross-sectional view the cabin air recirculation system in accordance with the present disclosure along the line A-A of Fig.15, Fig.23 schematically illustrates in cross-sectional view the cabin air recirculation system in accordance with the present disclosure along the line B-B of Fig.15, Fig.24 schematically illustrates in cross-sectional view the cabin air recirculation system in accordance with the present disclosure along the line C-C of Fig.15, wherein the cabin air recirculation system is in the second pure adsorption mode. As shown in Fig.22-Fig.24, all of the air introduced via air inlet 30 flows to the second passage 107 via the second port 105, through the second adsorption unit chamber 136, the second adsorption unit 120, the second outlet port 142, and then the adsorbed and purified air flows to the cabin through the air outlet 39;
(f) operating the cabin air recirculation system 100 in a second adsorption-regeneration mode when the humidity level and/or carbon dioxide level at the air outlet of the cabin air recirculation system 100 exceeds a first predetermined threshold. Fig.25 schematically illustrates in cross-sectional view the cabin air recirculation system in accordance with the present disclosure along the line A-A of Fig.15, Fig.26 schematically illustrates in cross-sectional view the cabin air recirculation system in accordance with the present disclosure along the line B-B of Fig.15, Fig.27 schematically illustrates in cross-sectional view the cabin air recirculation system in accordance with the present disclosure along the line C-C of Fig.15, wherein the cabin air recirculation system is in the second adsorption-regeneration mode. As shown in Fig.25-Fig.27, a relatively little amount of the air introduced via air inlet 30 flows to the second passage 107 via the second port 105, through the second heater 152, the second adsorption unit chamber 136, the second adsorption unit 120, the second exhaust port 144, and then the exhaust including gas and water flows to the environment through the exhaust outlet 39, whereas the remaining portion of the air introduced via air inlet 30 flows to the first passage 106 via the first port 104, through the first adsorption unit chamber 135, the first adsorption unit 2, the first outlet port 141, and then the adsorbed and purified air flows to the cabin through the air outlet 39. As a non-limiting example, in the second adsorption-regeneration mode, the amount of air used as regeneration gas may be about 1/3 of the air introduced via air inlet 30. However, as will be understood by those skilled in the art, the amount of air used as regeneration gas may be other amounts, such as 25%, 30%, 35%, without departing the scope of the disclosure; and
(g) operating the cabin air recirculation system 100 in a first pure adsorption mode when the humidity level and/or the carbon dioxide level at the exhaust outlet of the cabin air recirculation system is below a second predetermined threshold.

The step (c) comprises turning on a first heater located upstream of the first adsorption unit 2 to desorb moisture and/or carbon dioxide from the first adsorption unit 2; the step (f) includes turning on a second heater located upstream of the second adsorption unit 120 to desorb moisture and/or carbon dioxide from the second adsorption unit 120; the step (a) includes: controlling the intake flap system and the outlet flap system, so that the intake flap system is at the first pure adsorption position 201 and the outlet flap system is at the first position; the step (c) comprises: controlling the intake flap system and the outlet flap system so that the intake flap system is in the first adsorption-regeneration position 203 and the outlet flap system is in the second position; the step (e) comprises: controlling the intake flap system and the outlet flap system so that the intake flap system is in the second pure adsorption position 202 and the outlet flap system is in the second position; the step (f) comprises: controlling the intake flap system and the outlet flap system so that the intake flap system is in the second adsorption-regeneration position 204 and the outlet flap system is in the first position.

The cabin air recirculation system 100 of the present disclosure reduces the time during which the HVAC system operates in the external circulation mode, thereby reducing the energy consumption of the HVAC system and greatly improving the range of the vehicle.

The cabin air recirculation system 100 of the present disclosure allows the vehicle to filter and adsorb water vapor and carbon dioxide and other harmful substances in the air in the vehicle cabin, thereby further improving the air quality in the cabin and avoiding fogging of the vehicle during driving, and ensuring that the driver and passengers will not be fatigued and sleepy due to excessive concentrations of carbon dioxide.

The cabin air recirculation system 100 of the present disclosure is designed to switch to another adsorption unit for continuous adsorption when one adsorption unit is saturated and needs to be regenerated. This ensures that the cabin air recirculation system 100 can work continuously.

## Claims

1. An air deflector (6) for a cabin air recirculation system (100), the air deflector (6) comprising:
a heater mounting portion defining a heater mounting groove (21) to guide and position a heater (10, 152),
wherein the heater mounting portion includes a top wall (61), two vertical side walls (62) extending along a heater installation direction (H) on both sides of the heater mounting portion, and two ribs (25) extending along the heater installation direction (H) on both sides of the heater mounting portion,
wherein each rib (25) includes a first end portion (63) which is distal relative to the heater installation direction (H) and extends horizontally along the heater installation direction (H), and a second end portion (64) which is proximal relative to the heater installation direction (H) and extends horizontally along the heater installation direction (H), and
**characterised in that** a height of each rib (25) increases along the heater installation direction (H) between the first end portion (63) and the second end portion (64), so that a distance (h1) of between the rib (25) and the top wall (61) at the first end portion (63) is less than a distance (h2) between the rib (25) and the top wall (61) at the second end portion (64), to reduce a sliding friction of the heater (10, 152) during installation.

2. The air deflector (6) according to claim 1, wherein the distance (h1) between the rib (25) and the top wall (61) at the first end portion (63) is less than a height of the heater (10, 152), to fit the heater (10, 152) tightly and to avoid shaking after the heater (10, 152) is installed, and
wherein the distance (h2) between the rib (25) and the top wall (61) at the second end portion (64) is greater than the height of the heater (10, 152), to reduce the sliding friction of the heater (10, 152) during installation.

3. The air deflector (6) according to claim 2, further comprising a guide positioning rib (20) for cooperating with an installation guide groove (19) on an adsorption cartridge mounting frame (7) of the cabin air recirculation system (100).

4. The air deflector (6) according to claim 3, further comprising an air guide grid (23) suitable to evenly guide airflow in a vertical direction to a lateral direction of an adsorption cartridge (8) of the cabin air recirculation system (100) on both sides.

5. The air deflector (6) according to claim 4, further comprising an installation structure (24) for cooperating with an installation point (18) on the adsorption cartridge mounting frame (7), and for fixing the air deflector (6) and the adsorption cartridge mounting frame (7) together.

6. The air deflector (6) according to claim 5, wherein the installation structure (24) is a flange with a screwed hole, and
wherein the installation point (18) on the adsorption cartridge mounting frame (7) is a boss with a screwed hole.

7. The air deflector (6) according to claim 6, wherein each vertical side wall (62) includes a plurality of heat dissipation holes (22).

8. The air deflector (6) according to claim 7, wherein the top wall (61) is n-shaped, suitable to allow air to flow through a first heater (10) or a second heater (152) of the cabin air recirculation system (100).

## Patentansprüche

1. Luftdeflektor (6) für ein System zur Umwälzung der Innenraumluft (100), wobei der Luftdeflektor (6) Folgendes umfasst:
einen Heizungsmontageabschnitt, der eine Heizungsmontagenut (21) zum Führen und Positionieren einer Heizung (10, 152) definiert,
wobei der Heizungsmontageabschnitt eine obere Wand (61), zwei vertikale Seitenwände (62), die sich entlang einer Heizungsinstallationsrichtung (H) auf beiden Seiten des Heizungsmontageabschnitts erstrecken, und zwei Rippen (25) beinhaltet, die sich entlang der Heizungsinstallationsrichtung (H) auf beiden Seiten des Heizungsmontageabschnitts erstrecken,
wobei jede Rippe (25) einen ersten Endabschnitt (63), der distal in Bezug auf die Heizungsinstallationsrichtung (H) ist und sich horizontal entlang der Heizungsinstallationsrichtung (H) erstreckt, und einen zweiten Endabschnitt (64), der proximal in Bezug auf die Heizungsinstallationsrichtung (H) ist und sich horizontal entlang der Heizungsinstallationsrichtung (H) erstreckt, beinhaltet, und
**dadurch gekennzeichnet, dass** eine Höhe jeder Rippe (25) entlang der Heizungsinstallationsrichtung (H) zwischen dem ersten Endabschnitt (63) und dem zweiten Endabschnitt (64) zunimmt, so dass ein Abstand (h1) zwischen der Rippe (25) und der oberen Wand (61) am ersten Endabschnitt (63) geringer ist als ein Abstand (h2) zwischen der Rippe (25) und der oberen Wand (61) am zweiten Endabschnitt (64), um eine Gleitreibung der Heizung (10, 152) während der Installation zu verringern.

2. Luftdeflektor (6) nach Anspruch 1, wobei der Abstand (h1) zwischen der Rippe (25) und der oberen Wand (61) am ersten Endabschnitt (63) geringer ist als eine Höhe der Heizung (10, 152), um die Heizung (10, 152) fest zu montieren und ein Wackeln nach dem Einbau der Heizung (10, 152) zu vermeiden, und
wobei der Abstand (h2) zwischen der Rippe (25) und der oberen Wand (61) am zweiten Endabschnitt (64) größer ist als die Höhe der Heizung (10, 152), um die Gleitreibung der Heizung (10, 152) während der Installation zu verringern.

3. Luftdeflektor (6) nach Anspruch 2, ferner umfassend eine Führungspositionierrippe (20) zum Zusammenwirken mit einer Installationsführungsnut (19) an einem Montagerahmen für Adsorptionskartuschen (7) des Systems zur Umwälzung der Innenraumluft (100).

4. Luftdeflektor (6) nach Anspruch 3, ferner umfassend ein Luftleitgitter (23), das geeignet ist, einen Luftstrom gleichmäßig in einer Vertikalrichtung zu einer Lateralrichtung einer Adsorptionskartusche (8) des Systems zur Umwälzung der Innenraumluft (100) auf beiden Seiten zu leiten.

5. Luftdeflektor (6) nach Anspruch 4, ferner umfassend eine Montagestruktur (24) zum Zusammenwirken mit einem Montagepunkt (18) am Montagerahmen für Adsorptionskartuschen (7) und zum Verbinden des Luftdeflektors (6) mit dem Montagerahmen für Adsorptionskartuschen (7).

6. Luftdeflektor (6) nach Anspruch 5, wobei die Montagestruktur (24) ein Flansch mit einem Schraubenloch ist, und
wobei der Montagepunkt (18) auf dem Montagerahmen für Adsorptionskartuschen (7) ein Vorsprung mit einem Schraubenloch ist.

7. Luftdeflektor (6) nach Anspruch 6, wobei jede vertikale Seitenwand (62) eine Vielzahl von Wärmeableitungslöchern (22) beinhaltet.

8. Luftdeflektor (6) nach Anspruch 7, wobei die obere Wand (61) n-förmig ist, so dass Luft durch eine erste Heizung (10) oder eine zweite Heizung (152) des Systems zur Umwälzung der Innenraumluft (100) strömen kann.

## Revendications

1. Déflecteur d'air (6) destiné à un système de recirculation d'air d'habitacle (100), le déflecteur d'air (6) comprenant:
une partie de montage du dispositif de chauffage définissant une rainure de montage du dispositif chauffage (21) pour guider et positionner un dispositif de chauffage (10, 152),
dans lequel la partie de montage du dispositif de chauffage comporte une paroi supérieure (61), deux parois latérales verticales (62) s'étendant le long d'une direction d'installation du dispositif de chauffage (H) de part et d'autre de la partie de montage du dispositif de chauffage, et deux nervures (25) s'étendant le long de la direction d'installation du dispositif de chauffage (H) de part et d'autre de la partie de montage du dispositif de chauffage,
dans lequel chaque nervure (25) comporte une première partie d'extrémité (63) qui est distale par rapport à la direction d'installation du dispositif de chauffage (H), et une seconde partie d'extrémité (64) qui est proximale par rapport à la direction d'installation du dispositif de chauffage (H) et s'étend horizontalement le long de la direction d'installation du dispositif de chauffage (H), et
**caractérisé en ce qu'**une hauteur de chaque nervure (25) augmente le long de la direction d'installation du dispositif de chauffage (H) entre la première partie d'extrémité (63) et la seconde partie d'extrémité (64), de sorte qu'une distance (h1) comprise entre la nervure (25) et la paroi supérieure (61) au niveau de la première partie d'extrémité (63) est inférieure à une distance (h2) entre la nervure (25) et la paroi supérieure (61) au niveau de la seconde partie d'extrémité (64), afin de réduire un frottement par glissement du dispositif de chauffage (10, 152) pendant l'installation.

2. Déflecteur d'air (6) selon la revendication 1, dans lequel la distance (h1) entre la nervure (25) et la paroi supérieure (61) au niveau de la première partie d'extrémité (63) est inférieure à une hauteur du dispositif de chauffage (10, 152), pour ajuster le dispositif chauffage (10, 152) solidement et pour éviter une secousse après que le dispositif de chauffage (10, 152) a été installé, et
dans lequel la distance (h2) entre la nervure (25) et la paroi supérieure (61) au niveau de la seconde partie d'extrémité (64) est supérieure à la hauteur du dispositif de chauffage (10, 152), afin de réduire le frottement par glissement du dispositif de chauffage (10, 152) pendant l'installation.

3. Déflecteur d'air (6) selon la revendication 2, comprenant en outre une nervure de positionnement de guidage (20) destinée à coopérer avec une rainure de guidage d'installation (19) sur un cadre de montage de cartouche d'adsorption (7) du système de recirculation d'air d'habitacle (100).

4. Déflecteur d'air (6) selon la revendication 3, comprenant en outre une grille de guidage d'air (23) appropriée pour guider uniformément un flux d'air dans une direction verticale vers une direction latérale d'une cartouche d'adsorption (8) du système de recirculation d'air d'habitacle (100) de chaque côté.

5. Déflecteur d'air (6) selon la revendication 4, comprenant en outre une structure d'installation (24) destinée à coopérer avec un point d'installation (18) sur le cadre de montage de cartouche d'adsorption (7) et destinée à raccorder le déflecteur d'air (6) au cadre de montage de cartouche d'adsorption (7).

6. Déflecteur d'air (6) selon la revendication 5, dans lequel la structure d'installation (24) est une bride avec un trou de vis, et
dans lequel le point d'installation (18) sur le cadre de montage de cartouche d'adsorption (7) est une protubérance avec un trou de vis.

7. Déflecteur d'air (6) selon la revendication 6, dans lequel chaque paroi latérale verticale (62) comporte une pluralité de trous de dissipation de chaleur (22).

8. Déflecteur d'air (6) selon la revendication 7, dans lequel la paroi supérieure (61) est en forme de n, appropriée à permettre à l'air de s'écouler à travers un premier dispositif de chauffage (10) ou un second dispositif de chauffage (152) du système de recirculation d'air d'habitacle (100).
